# EUROPÄISCHE PATENTANMELDUNG

(11) **EP 0 538 706 A2**
(43) Veröffentlichungstag der Anmeldung: **28.04.1993**
(21) Anmeldenummer: 92117413.2
(22) Anmeldetag: 12.10.1992
(51) Int. Cl.: H02K 5/14, H02K 23/18, H01R 39/44

(54) **Elektrische Maschine**

(30) Priorität: 24.10.1991 DE 4135176
(71) Anmelder: SIEMENS AKTIENGESELLSCHAFT, D-80333 München (DE)
(72) Erfinder: Krenzer, Georg, Dipl.-Ing. (FH), W-8502 Zirndorf (DE)

(57) **Zusammenfassung**

Die Erfindung betrifft eine elektrische Maschine mit einem Kommutator, an deren kommutatorseitigem Lagerschild (1) ein Bürstenapparat (2) verdrehbar angeordnet und mittels wenigstens einer Befestigungsschraube (3) gehalten ist. Die Einstellung des Bürstenapparates (2) auf die neutrale Zone wird dadurch vereinfacht, daß die Gewindebohrungen (4) für die Befestigungsschrauben (3) im kommutatorseitigen Lagerschild (1) bis zu dessen Außenseite (11) hin durchgehend ausgebildet sind und die Befestigungsschrauben (3) sowohl an ihrem kopfseitigen Ende als auch an ihrem schaftseitigen Ende (32) mittels eines Verdrehwerkzeugs verdrehbar sind.

## Beschreibung

Die Erfindung betrifft eine elektrische Maschine gemäß Oberbegriff des Anspruchs 1.

Bei derartigen Gleichstrommaschinen, die z.B. durch die DD-PS 145 148 bekannt sind, wird der Bürstenapparat auf die neutrale Zone voreingestellt. Anschließend wird die Kommutierung bei laufender Maschine gemessen. Nach dem Abschalten wird eine Feineinstellung des Bürstenapparates auf die neutrale Zone vorgenommen. Dazu müssen die schlecht zugänglichen und nahe am heißen Kommutator angebrachten Befestigungsschrauben gelöst werden. Danach wird der Bürstenapparat gegenüber seiner bisherigen Position ein wenig verdreht und wieder angeschraubt. Nach der Befestigung des Bürstenapparates wird die Gleichstrommaschine erneut eingeschaltet und ihre Kommutierung gemessen. Gegebenenfalls wird diese Feineinstellung mehrfach wiederholt.

Aufgabe der vorliegenden Erfindung ist es, bei einer elektrischen Maschine der eingangs genannten Art die Einstellung des Bürstenapparates auf die neutrale Zone zu vereinfachen.

Die Aufgabe wird erfindungsgemäß durch die im Kennzeichen des Anspruchs 1 angegebenen Merkmale gelöst. Vorteilhafte Ausgestaltungen der erfindungsgemäßen elektrischen Maschine sind in den Ansprüchen 2 bis 6 beschrieben.

Bei der erfindungsgemäßen elektrischen Maschine wird durch die Verwendung spezieller Befestigungsschrauben, die in durchgehenden, im kommutatorseitigen Lagerschild angeordneten Gewindebohrungen geführt sind, die Einstellung des Bürstenapparates auf die neutrale Zone wesentlich vereinfacht. Die Befestigungsschrauben sind bei der elektrischen Maschine nach Anspruch 1 sowohl von innen als auch von außen zugänglich, so daß nach einer Voreinstellung des Bürstenapparates seine Feineinstellung bei möglicherweise heißem Kommutator an der gut zugänglichen Außenseite des kommutatorseitigen Lagerschildes erfolgen kann.

Die Innenöffnungen (Anspruch 2) können in Abhängigkeit von dem verwendeten Verdrehwerkzeug verschiedene Innenkonturen aufweisen. Bei einer elektrischen Maschine gemäß Anspruch 5 kann zur Feineinstellung des Bürstenapparates ein Schraubendreher verwendet werden. Bei einer Ausgestaltung gemäß Anspruch 6 kann in vorteilhafter Weise ein Schraubendreher für Innensechskantschrauben eingesetzt werden.

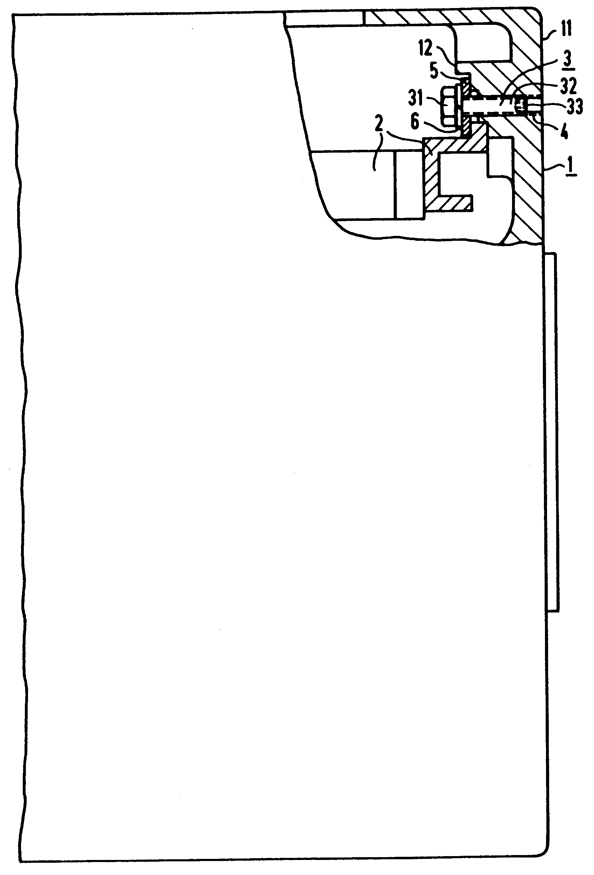

Anhand eines in der Zeichnung dargestellten Ausführungsbeispieles wird die Erfindung nachfolgend näher erläutert.

In dem Teilschnitt der Bürstenseite einer elektrischen Maschine ist mit 1 der kommutatorseitige Lagerschild bezeichnet. An einem solchen Lagerschild 1 ist ein nicht näher dargestellter Bürstenapparat 2 mittels Befestigungsschrauben 3, von denen in der Zeichnung nur eine dargestellt ist, gehalten. Das Lagerschild 1 weist hierzu durchgehende Gewindebohrungen 4 auf, in die, von der Innenseite 12 des Lagerschildes 1 aus, die Befestigungsschrauben 3 einschraubbar sind.

Zwischen der Innenseite 12 des Lagerschildes 1 und dem Bürstenapparat 2 einerseits sowie dem Schraubenkopf 31 andererseits ist ein Druckelement 5 zur Kraftverteilung und ein Federring 6 zur Sicherung der Befestigungsschraube 3 gegen Losdrehen angeordnet. Die Befestigungsschraube 3 weist an ihrem schaftseitigen Ende 32 eine Innenöffnung 33 (Antriebsform) auf, in die ein Werkzeug zum Lösen bzw. Festdrehen der Befestigungsschraube 3 formschlüssig einsteckbar ist. Die Innenöffnung 33 kann hierbei als Schlitz oder als Sechskant ausgebildet sein. Auch eine andere Innen- bzw. Außenkontur der Antriebsform, wie z.B. Vierkant oder Zwölfzahn, ist denkbar.

Bei der erfindungsgemäßen Gleichstrommaschine wird die Voreinstellung des Bürstenapparates 2 durch Eindrehen der Befestigungsschraube 3 in den kommutatorseitigen Lagerschild 1 vorgenommen. Die Befestigungsschraube 3 wird hierzu von der Innenseite 12 in die durchgehende Bohrung 4 eingeschraubt. Nach der Voreinstellung des Bürstenapparates erfolgt das für seine Feineinstellung notwendige Lösen bzw. Festdrehen der Befestigungsschraube 3 ausschließlich durch die von der Außenseite 11 des Lagerschildes 1 her gut zugängliche Gewindebohrung 4. Das hierfür erforderliche Verdrehwerkzeug wird von der Außenseite 11 in die Bohrung 4 eingeführt und formschlüssig in die Innenöffnung 33 der Befestigungsschraube 3 eingesteckt.

## Patentansprüche

1. Elektrische Maschine mit einem Kommutator, an deren kommutatorseitigem Lagerschild (1) ein Bürstenapparat (2) verdrehbar angeordnet und mittels wenigstens einer Befestigungsschraube (3) gehalten ist, wobei die Gewindebohrungen (4) für die Befestigungsschrauben (3) im kommutatorseitigen Lagerschild (1) bis zu dessen Außenseite (11) hin durchgehend ausgebildet sind und die Befestigungsschrauben (3) sowohl an ihrem kopfseitigen Ende als auch an ihrem schaftseitigen Ende (32) mittels eines Verdrehwerkzeugs verdrehbar sind.

2. Elektrische Maschine nach Anspruch 1, wobei die Befestigungsschrauben (3) an ihrem schaftseitigen Ende (32) eine Innenöffnung (33) aufweisen, deren Innenkontur der Außenkontur eines Verdrehwerkzeugs entspricht.

3. Elektrische Maschine nach Anspruch 1, wobei die Befestigungsschrauben (3) an ihrem schaftseitigen Ende (32) eine Außenkontur aufweisen, die der Innenkontur eines Verdrehwerkzeugs entspricht.

4. Elektrische Maschine nach Anspruch 2, wobei die Innenkontur der Innenöffnung (33) als Vielkantköffnung ausgebildet ist.

5. Elektrische Maschine nach Anspruch 4, wobei die Innenkontur der Innenöffnung (33) rechteckförmig ausgebildet ist.

6. Elektrische Maschine nach Anspruch 4, wobei die Innenkontur der Innenöffnung (33) als Sechskant ausgebildet ist.
